# EUROPEAN PATENT APPLICATION

(11) **EP 4 144 690 A1**
(43) Date of publication of application: **08.03.2023**
(21) Application number: 21194663.7
(22) Date of filing: 02.09.2021
(51) Int. Cl.: C01B 17/45, C07F 9/02, C07F 9/576

(54) **METHOD FOR DECOMPOSING SULFUR HEXAFLUORIDE**

(71) Applicant: Universität Innsbruck, 6020 Innsbruck (AT)
(72) Inventor: Rotering, Philipp, 48149 Münster (DE); Dielmann, Fabian, 6020 Innsbruck (AT)
(74) Representative: Schwarz & Partner Patentanwälte GmbH

(57) **Abstract**

A method for decomposing SF₆ comprising the step of contacting SF₆ with a phosphine PR¹R²R³, wherein the phosphine PR¹R²R³ is contacted with SF₆ in the presence of a light source, wherein (a) the phosphine PR¹R²R ³ is an alkyl phosphine and R¹, R² and R³ are each C₁ to C₁₂ alkyl groups, wherein in addition a photosensitizer comprising an aryl group is present; or (b) the phosphine PR¹R²R³ is an aryl phosphine and at least one of R¹, R² or R³ is selected from the group consisting of phenyl, C₁ to C₁₂-alkyl substituted phenyl, C₁ to C₁₂-alkyloxy substituted phenyl, NR⁴R⁵ substituted phenyl, aryl substituted phenyl and combinations thereof, wherein R⁴ and R⁵ are each independently selected from H and C₁ to C₁₂-alkyl.

## Description

The present invention relates to a method for decomposing sulfur hexafluoride SF₆ comprising the step of contacting SF₆ with a phosphine. Furthermore, the invention relates to a device for decomposing sulfur hexafluoride.

### Background of the invention

Sulfur hexafluoride (SF₆) is a colourless, odourless and non-toxic gas with key applications in gas phase arc-quenching current interruption instruments in power grid sectors and in the semiconductor production field. Because of the extreme global warming potential of SF₆ (approximately 23,500 fold compared to CO₂ over a 100-year time frame) and long atmospheric lifetime, SF₆ is listed as one of the greenhouse gases in the 1997 Kyoto Protocol. Therefore, the use of SF₆ is strictly limited to industries without alternatives to SF₆. The electrical industry being the largest contributor to SF₆ emissions is excepted from the ban because there is no alternative available for SF₆ in the power grid sector.

Despite many efforts and commitments of the electrical industry to minimize the leakage rates of SF₆ in electrical equipment and to recycle SF₆, the concentration in the atmosphere is still increasing.

The only practical method for the decomposition of SF₆ is its pyrolysis in the presence of CaCO₃ at temperatures above 1100 °C yielding CaSO₄ and CaF₂.

For milder conditions, catalysts have been extensively studied to catalyse the hydrolysis or oxidation of SF₆ which commonly consist of active metal particles, metal oxides, zeolites or transition metal complexes.

Buß et al. Nucleophilic Activation of Sulfur Hexafluoride: Metal-Free, Selective Degradation by Phosphines, Angew. Chem. Int. Ed. 2018, 57, 4951-4955 report the degradation of SF₆ by reaction with phosphines in solution in which the phosphines carry an imidazolin-2-imine or a pyridine-4-imine substituent. Similarly, WO 2019/077086 A1 discloses the reaction of SF₆ with a phosphine with π-donating characteristics.

However, all mentioned methods suffer from toxic reaction products, high costs, low SF₆ removal rates or are simply too complex for industrial applications. Consequently, it is necessary to collect and transport SF₆ from its point of use to a central recycling unit. Such a transport is costly and a further source of release of SF₆ into atmosphere, e.g. due to leakage.

### Brief description of the invention

The object of the present invention is to provide a method of degradation of SF₆ that can be performed at the point of use involving no toxic chemicals or hazardous reaction conditions.

This object is solved by a method for decomposing SF₆, comprising the step of contacting SF₆ with a phosphine PR¹R²R³, characterized in that
the phosphine PR¹R²R³ is contacted with SF₆ in the presence of a light source, wherein
a) the phosphine PR¹R²R³ is an alkyl phosphine and R¹, R² and R³ are each alkyl groups, wherein in addition a photosensitizer is present; or
b) the phosphine PR¹R²R³ is an aryl phosphine and at least one of R¹, R² or R³ is selected from the group consisting of phenyl, C₁ to C₁₂-alkyl substituted phenyl, C₁ to C₁₂-alkyloxy substituted phenyl, NR⁴R⁵ substituted phenyl, aryl substituted phenyl and combinations thereof, wherein R⁴ and R⁵ are each independently selected from H and C₁ to C₁₂-alkyl.

The inventors have found a solvent-free photolytic degradation of sulfur hexafluoride by alkyl phosphine in combination with a photosensitizer or by arylphosphines (without the need of a photosensitizer) yielding phosphine sulphides and difluoroalkylphosphoranes or difluoroarylphosphoranes. The latter can be used as fluorination agents for a range of carboxylic acids and inorganic substrates.

Surprisingly, the inventors found that alkyl phosphine in combination with a photosensitizer or arylphosphines react with SF₆ without solvents and in the presence of a light source. Temperatures of 60 °C or higher, preferably of 80 °C and higher, increase the yield and/or reaction rate of the reaction.

The inventors also showed that sulfur dioxide SO₂, being formed as a by-product mainly during arc-quenching in power grids or generally when water or oxygen are present during decomposition of SF₆ is also decomposed completely under such reaction conditions.

While Buss et al. report that solutions of alkyl phosphines do not react with SF₆ at temperatures of 150°C and elevated pressure, the inventors now have found that the presence of a photosensitizer suddenly allows the reaction of the phosphine and SF₆. Even more surprisingly, certain aryl phosphines do not require a photosensitizer at all to allow the photoreaction of the phosphine and SF₆. Accordingly, the reaction can be carried out in a simple reactor only including the phosphine and a light source.

In one embodiment PR¹R²R³ is an alkyl phosphine and R¹ = R² = R³, preferably R¹, R² and R³ are each methyl, ethyl, propyl, such as n-propyl or isopropyl, or butyl, such as n-butyl, iso-butyl, sec-butyl or tert-butyl.

If PR¹R²R³ is an alkyl phosphine, the photosensitizer is preferably selected from the group consisting of benzophenone, acetophenone, anthracene, or mixtures thereof.

In a preferred embodiment, the phosphine PR¹R²R³ has a melting point of ≤ 150 °C, preferably ≤ 100 °C.

If the phosphine PR¹R²R³ is an aryl phosphine, the at least one of R¹, R² and R³ is selected from the group consisting of phenyl, C₁ to C₁₂-alkyl substituted phenyl, C₁ to C₁₂-alkyloxy substituted phenyl, NR⁴R⁵ substituted phenyl, aryl substituted phenyl and combinations thereof, wherein R⁴ and R⁵ are each independently selected from H, C₁ to C₁₂-alkyl or R⁴ and R⁵ together form a C₁ to C₅-Ring. Preferably, if the phosphine PR¹R²R³ is an aryl phosphine, the at least one of R¹, R² and R³ is selected from the group consisting of phenyl, C₁ to C₄-alkyl substituted phenyl, C₁ to C₄-alkyloxy substituted phenyl, NR⁴R⁵ substituted phenyl, aryl substituted phenyl and combinations thereof, wherein R⁴ and R⁵ are each independently selected from H, C₁ to C₄-alkyl or R⁴ and R⁵ together form a C₁ to C₅-Ring. C₁ to C₄ in particular means methyl, ethyl, propyl, such as n-propyl or isopropyl, or butyl, such as n-butyl, iso-butyl, sec-butyl or tert-butyl.

At least two of R¹, R² and R³ may be identical.

In one embodiment R¹ = R² = R³.

One or two of R¹, R² and R³ may be selected from the group consisting of H, C₁ to C₁₂-alkyl, NR⁶R⁷, wherein R⁶ and R⁷ are each independently selected from H, C₁ to C₁₂-alkyl or R⁴ and R⁵ together form a C₁ to C₅-Ring. Preferably, one or two of R¹, R² and R³ may be selected from the group consisting of H, C₁ to C₄-alkyl, NR⁶R⁷, wherein R⁶ and R⁷ are each independently selected from H, C₁ to C₄-alkyl or R⁴ and R⁵ together form a C₁ to C₅-Ring. C₁ to C₄ in particular means methyl, ethyl, propyl, such as n-propyl or isopropyl, or butyl, such as n-butyl, iso-butyl, sec-butyl or tert-butyl.

In a preferred embodiment PR¹R²R³ is an aryl phosphine and each of R¹, R² or R³ is selected from the group consisting of phenyl, p-methoxyphenyl or combinations thereof. Most preferably, the aryl phosphine PR¹R²R³ is triphenylphosphine. Triphenylphosphine has a melting point of 80°C which is ideal for carrying out the method according to the invention without solvent. Furthermore, triphenylphosphine is (nearly) non-toxic and air stable.

The light source can be an LED light. Preferably it emits light at a wavelength covering at least a subrange of 300 to 420 nm. The relative irradiance of the light source is preferably in the range of 5 mw/cm² to 30 mW/cm², more preferably 8 to 10 mW/cm².

The invention also relates to a device for decomposing sulfur hexafluoride (SF₆). The device especially useful for carrying out the above-mentioned method is characterized as follows:
The device for decomposing SF₆, comprises
- a gastight housing enclosing a reaction chamber, wherein the housing comprises an inlet valve and an exit valve,
- a controlling unit for controlling the pressure in said housing by means of controlling the inlet valve and the exit valve,
- a light source configured to emit light at a wavelength at least in a subrange of 300 to 420 nm,
- a source for a phosphine being connected to said inlet valve,
- an inlet for SF₆ and
- a heating device for heating the reaction chamber.

Such a device is especially adapted to carry out the claimed invention with maximum yield of decomposition and especially adapted to carry out the method at the site where the SF₆ is located. The device can thus be portable.

In a preferred embodiment the device is further characterized in that the controlling unit comprises at least one pressure sensor at the inlet valve.

In one embodiment of the invention the pressure controlling unit comprises at least one pressure sensor inside the reaction chamber. This allows better surveillance of the reaction progress.

Furthermore, the device can be configured to control the light source and the heating device in order to maximize the yield and reaction kinetics.

### Detailed description of the invention

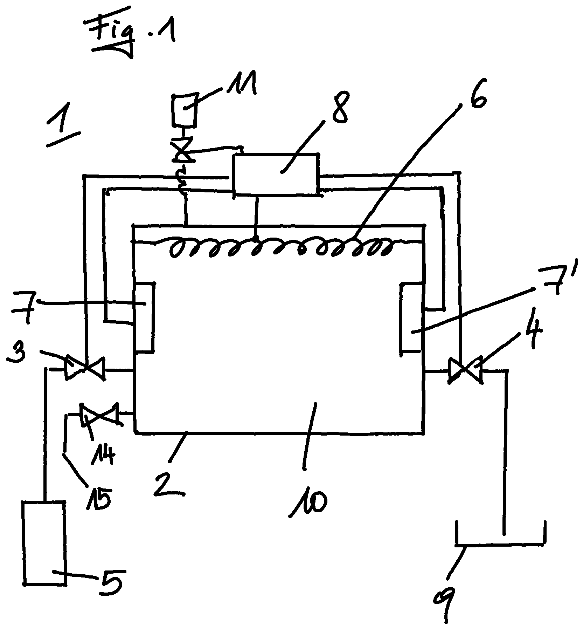

Fig. 1 schematically shows a device for carrying out the invention.

The inventors investigated solid PPh₃ in an atmosphere of SF₆ by irradiation with a 365 nm LED (relative irradiance: 9 mW/cm²) for 24 h. Although the solid turned light brown on the side facing the lamp, the ³¹P NMR spectra of the dissolved solid only revealed the resonance of the starting material. However, in the ¹⁹F NMR spectra a small doublet (*J* = 659.5 Hz) at *δ* = -39.5 ppm is detectable indicating the formation of small quantities of difluorotriphenylphosphorane. Ideal for such solid-gas reactions is the fact that reactions take place at the surface. Thus, a small particle size is advantageous. PPh₃ is a solid that already melts at 80 °C and is thus well suited for liquid-gas reactions at elevated temperatures. It turned out that an irradiated melt of PPh₃ readily reacts with SF₆. After 8 h irradiation full consumption of PPh₃ was observed to give two products in a 3:1 ratio in quantitative yield which were identified as difluorotriphenylphosphorane and triphenylphosphine sulphide as shown in **Scheme 1**. This defined mixture of reaction products is denoted **TPP-Fluor** hereafter.

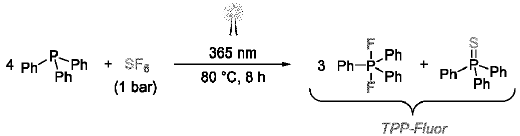

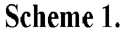

Photolytic reduction of SF₆ with triphenylphosphine affords a mixture of difluorotriphenylphosphorane and triphenylphosphine sulfide.

Difluorophosphoran can be easily separated from the sulfide. The found procedure for the synthesis of TPP-Fluor has the following advantages:
1) PPh₃ is a cheap, non-poisonous, air-stable solid.
2) Defined reaction products are formed in a quantitative reaction.
3) Solvent-free reactions are economic and superfluous workup.
4) Reaction products are solid, non-volatile compounds and a feedstock for further fluorinations.
5) Easy reaction-setup enables scalable reaction only requiring UV-lamp, heater, and a gas-cuvette. No gas-pressure is needed. The required UV-light intensity and wavelength are harmless for humans. A bonus effect is that SO₂, being formed as a by-product, is also destroyed.

A series of phosphines was investigated for the photolytic activation of SF₆. Since some phosphines are already in the liquid state at room temperate, all experiments were performed in THF solutions without heating for comparable reaction conditions.

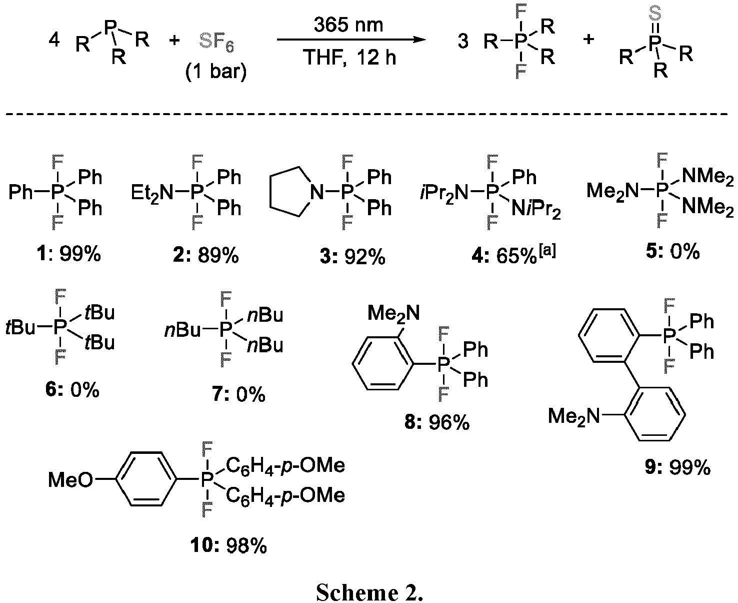

Scope of the photolytic reaction of phosphines with SF₆ affording a mixture of phosphine sulfides and difluorophosphoranes of which only the latter are depicted. ³¹P NMR yields. [a] free phosphine present in reaction mixture.

For PPh₃ (**1**) the solvation in THF has no influence on the reaction with SF₆ and the same reaction products were observed. It turned out that alkyl phosphines such as *n*Bu₃P and *t*Bu₃P do not react with SF₆ upon irradiation (**6**, 7) under these conditions (absence of photosensitizer). To investigate the influence of the phenyl group at the phosphorus atom a series of amino phosphines were synthesized with zero (**5**), one (**4**) and two (**2**, **3**) phenyl groups, respectively. It turned out, that the photolytically degradation of SF₆ requires at least one phenyl group at the phosphorus atom. However, the reaction of **4** is much slower but afforded the same reaction products. For **2** and **3** the results were comparable with **1**. By attaching an NMe₂ group directly to the phenyl groups (**8**) or with an additional phenyl linker (**9**) the functionalization of the difluorophosphorane with an additional donor function next to the phosphorus atom succeeded. For phosphines with alkyl- or methoxy groups in *para* position (10) decomposition of the phosphine upon irradiation was observed.

To gain an insight into the reaction pathway of arylphosphines with SF₆ and especially on the initial activation step quantum chemical calculations were performed. The pre-reactive complex [Ph₃P···SF_{6]} is electronically excited of the encounter complex [Ph₃P...SF_{6]} occuring with a calculated wavelength of 360 nm and corresponds to a charge-transfer state in which one electron is transferred from an π orbital of the arene to the delocalized σ^{∗} orbital of SF₆. According to the TD-DFT result, the n(P)→σ^{∗}(SF6) occurs at an even higher wavelength (525 nm) with low oscillator strength and is therefore not expected to be involved in the reaction, which was confirmed experimentally by irradiation with a 585 nm LED and no change in the ³¹P NMR spectra. This could constitute a first explanation for the observation that phosphines lacking any aryl group do not react.

The first reaction step is formally a "F⁺ transfer" which is exothermic resulting in an ion pair (Ph₃PF⁺ + SF₅⁻)

Quantum chemical calculations show that the initial SF₆ activation step is a π(Ar)→σ^{∗}(SF₆) charge transfer excitation. Thus, an external π system as photosensitizer combined with an alkyl phosphine was investigated. Tri-*n*-butylphosphine does not react with SF₆ upon irradiation with light of 365 nm wavelength. However, when the reaction is performed in the presence of benzophenone or acetophenone as photosensitizer, SF₆ is decomposed within 24 h to give a mixture of tri-*n*-butylphosphine sulfide and tri-*n*-butyldifluorophosphorane. Comparing these two photosensitizers acetophenone is the more selective (99% vs. 80% yield). Accordingly, an aryl group in the photosensitizer takes over the function of the aryl group in the phosphine.

A device for carrying out the method is schematically shown in Fig. 1. The device 1 comprises a gastight housing 2 enclosing a reaction chamber 10, wherein the housing 2 comprises an inlet valve 3 and an exit valve 4. The housing also includes an inlet 15 for SF₆ regulated by a valve 14. The device 1 also comprises a controlling unit 8 for controlling the pressure in said reaction chamber 10 by means of controlling the inlet valve 3 and the exit valve 4. Furthermore, there is light source 7, 7' configured to emit light at a wave length of 300 to 420 nm. A source 5 for a phosphine is connected to said inlet valve 3 and allows feeding the phosphine. An inlet for SF₆ is provided to feed SF₆ into the reaction chamber 10. Depending on the phosphine used there may also be a storage 11 for a photosensitizer to add photosensitizer to the reaction chamber 6. Furthermore, there is a heating device 6 for heating the reaction chamber 10.

The controlling device 8 is connected to the heating device 6, the light source 7, 7' and the optional valve for the storage. The exit valve 4 is connected to a container 9 for the reaction products. The container 9 may also include a closed container for storing reaction products. The reaction products are usually solid so the container 9 may also be inside the reaction chamber 2.

The heating element 6 can e.g. be a heating rod or include heating coils. The light source 7, 7' may be arranged inside the reaction chamber 10 or outside the reaction chamber 10 at the housing 2 if the reaction chamber 10 includes transparent areas for letting the light enter the reaction chamber 10 (and optionally open).

If SF₆ is feed as a mixture with air, then there also has to be an exit valve (not shown) for conducting remaining air (mainly N₂) out of the reaction chamber.

## Claims

1. A method for decomposing SF₆ comprising the step of contacting SF₆ with a phosphine PR¹R²R³, **characterized in that**
the phosphine PR¹R²R³ is contacted with SF₆ in the presence of a light source, wherein
a) the phosphine PR¹R²R³ is an alkyl phosphine and R¹, R² and R³ are each C₁ to C₁₂ alkyl groups, wherein in addition a photosensitizer comprising an aryl group is present; or
b) the phosphine PR¹R²R³ is an aryl phosphine and at least one of R¹, R² or R³ is selected from the group consisting of phenyl, C₁ to C₁₂-alkyl substituted phenyl, C₁ to C₁₂-alkyloxy substituted phenyl, NR⁴R⁵ substituted phenyl, aryl substituted phenyl and combinations thereof, wherein R⁴ and R⁵ are each independently selected from H and C₁ to C₁₂-alkyl.

2. A method according to claim 1, wherein one or two of R¹, R² and R³ are selected from the group consisting of H, C₁ to C₁₂-alkyl, NR⁶R⁷, wherein R⁶ and R⁷ are each independently selected from H, C₁ to C₁₂-alkyl or R⁴ and R⁵ together form a C₁ to C₅-Ring.

3. A method according to claim 1 or claim 2, **characterized in that** PR¹R²R³ is an alkyl phosphine and R¹ = R² = R³, preferably R¹, R² and R³ are each methyl.

4. A method according to one of claims 1 to 3, **characterized in that** PR¹R²R³ is an alkyl phosphine and the photosensitizer is selected from the group consisting of benzophenone, acetophenone, anthracene, or mixtures thereof.

5. A method according to claim 1 or claim 2, **characterized in that** PR¹R²R³ is an aryl phosphine and each of R¹, R² or R³ is selected from the group consisting of phenyl, C₁ to C₁₂-alkyl substituted phenyl, C₁ to C₁₂-alkyloxysubstituted phenyl, NR⁴R⁵ substituted phenyl, aryl substituted phenyl and combinations thereof, wherein R⁴ and R⁵ are each independently selected from H and C₁ to C₁₂-alkyl.

6. A method according to claim 5, **characterized in that** the aryl phosphine PR¹R²R³ is triphenylphosphine.

7. A method according to any one of claims 1 to 6, **characterized in that** the light source emits light at least in a subrange of the wavelength range 300 to 420 nm.

8. A method according to any one of claims 1 to 7, **characterized in that** the phosphine PR¹R²R³ has a melting point of ≤ 150 °C.

9. A method according to one of claims 1 to 8, **characterized in that** the reaction is carried out at a temperature of at least 60 °C.

10. Device (1) for decomposing SF₆, comprising
• a gastight housing (2) enclosing a reaction chamber (10), wherein the housing comprises an inlet valve (3) and an exit valve (4),
• a controlling unit (8) for controlling the pressure in said reaction chamber (10) by means of controlling the inlet valve (3) and the exit valve (4),
• a light source (7, 7') configured to emit light at least in a subrange of the wavelength range 300 to 420 nm and to irradiate the reaction chamber (10),
• a source (5) for a phosphine being connected to said inlet valve (3),
• an inlet (15) for SF₆ and
• a heating device (6) for heating the reaction chamber (10).

11. Device according to claim 10, **characterized in that** the controlling unit (8) comprises at least one pressure sensor in the region of the inlet valve (3).

12. Device according to claim 10 or claim 11, **characterized in that** the controlling unit (8) comprises at least one pressure sensor inside the reaction chamber (10).

13. Device according to one of claims 10 to 12, **characterized in that** the controlling device (8) is configured to control the light source (7, 7') and the heating device (6).
